# EUROPÄISCHE PATENTANMELDUNG

(11) **EP 2 918 204 A1**
(43) Veröffentlichungstag der Anmeldung: **16.09.2015**
(21) Anmeldenummer: 14159584.3
(22) Anmeldetag: 13.03.2014
(51) Int. Cl.: A47J 37/10

(54) **Bratpfanne**

(71) Anmelder: Möhl, Harald, 58515 Lüdenscheid (DE)
(72) Erfinder: Möhl, Harald, 58515 Lüdenscheid (DE)
(74) Vertreter: Patentanwälte Dörner & Kötter PartG mbB

(57) **Zusammenfassung**

Die Erfindung betrifft eine Bratpfanne (1), mit einem Boden (2) und einem an diesem angeformten umlaufenden Rand (4), an dem wenigstens ein Griff angeordnet ist, wobei an dem Boden (2) auf seiner dem Rand (4) zugewandten Oberseite eine Steganordnung (3) zur Erzielung eines Grillmusters angeordnet ist.

## Beschreibung

Die Erfindung betrifft eine Bratpfanne mit einem Boden und einem an diesem angeformten umlaufenden Rand, an dem wenigstens ein Griff angeordnet ist.

Bratpfannen werden zum Braten oder Garen von Lebensmitteln verwendet. Bei der Zubereitung von Fleisch oder Fisch ist es wünschenswert, dieses Bratgut gleichsam der Zubereitung auf einem Grill mit einem Grillmuster zu versehen. Darüber hinaus soll das gegarte Grillgut eine saftige Konsistenz aufweisen.

Hier setzt die vorliegende Erfindung an. Der Erfindung liegt die Aufgabe zu Grunde, eine Bratpfanne bereitzustellen, die ein saftiges Garen von Brat- bzw. Grillgut bei gleichzeitiger Erzeugung eines Grillmusters ermöglicht. Gemäß der Erfindung wird diese Aufgabe durch die Merkmale des kennzeichnenden Teils des Schutzanspruchs 1 gelöst.

Mit der Erfindung ist eine Bratpfanne bereitgestellt, die ein saftiges Garen von Brat- bzw. Grillgut bei gleichzeitigem Aufbringen eines Grillmusters ermöglicht. Durch die auf dem Boden angeformte Steganordnung ist zum einen durch die Stegoberfläche die Abzeichnung eines Grillmusters bewirkt. Darüber hinaus ist durch die nicht vollflächige Auflage des Brat- bzw. Grillguts auf dem Pfannenboden ein schonender Bratvorgang ermöglicht.

In Weiterbildung der Erfindung umfasst die Steganordnung parallel regelmäßig beabstandet zueinander angeordnete Stege. Hierdurch ist ein für konventionelle Grills typisches Grillmuster erzielbar.

In Ausgestaltung der Erfindung ist die Steganordnung derart durch sich kreuzende Stege gebildet, dass ein Parallelogramm-Grillmuster, insbesondere ein Rautenmuster erzielt ist. Hierdurch ist ein Grillmuster gebildet, das typischerweise durch mehrfaches Wenden des Grillgutes auf einem Grill entsteht. Durch Vorsehen eines solchen Parallelogramm-Grillmusters ist das typische Grillmuster durch einmaliges Wenden des Grillguts erzielbar. Alternativ ist das Rautenmuster auch durch eine Anordnung vieler einzelner Stege mit geschlossener rautenförmiger Kontur erzielbar.

In Weiterbildung der Erfindung weisen die Stege der Steganordnung einen im Wesentlichen dreiecksförmigen Querschnitt auf. Durch die hierdurch bewirkte spitze Auflagekante ist ein scharf konturiertes Grillmuster auf dem Grillgut erzielbar.

In weiterer Ausgestaltung der Erfindung ist die Steganordnung umgebend ein umlaufender Kanal angeordnet. Hierdurch ist eine Abführung von überschüssigem Fett beim Bratvorgang ermöglicht.

In weiterer Ausgestaltung der Erfindung ist ein Reservoir angeordnet, durch das der Kanal geführt ist. Hierdurch ist die Aufnahmekapazität für überschüssiges Fett beim Bratvorgang vergrößert. Dabei ist das Reservoir bevorzugt durch wenigstens einen verbreiterten Bereich des Kanals gebildet.

In weiterer Ausgestaltung der Erfindung ist die Bratpfanne als Metallgussteil ausgebildet. Hierdurch ist eine gleichmäßige Wärmeverteilung in der Bratpfanne erzielt. Durch die eingegossene Verrippung ist zudem auch vor dem Hintergrund der großen Temperaturunterschiede im Betrieb eine hohe Verbindungsteifigkeit gegeben.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

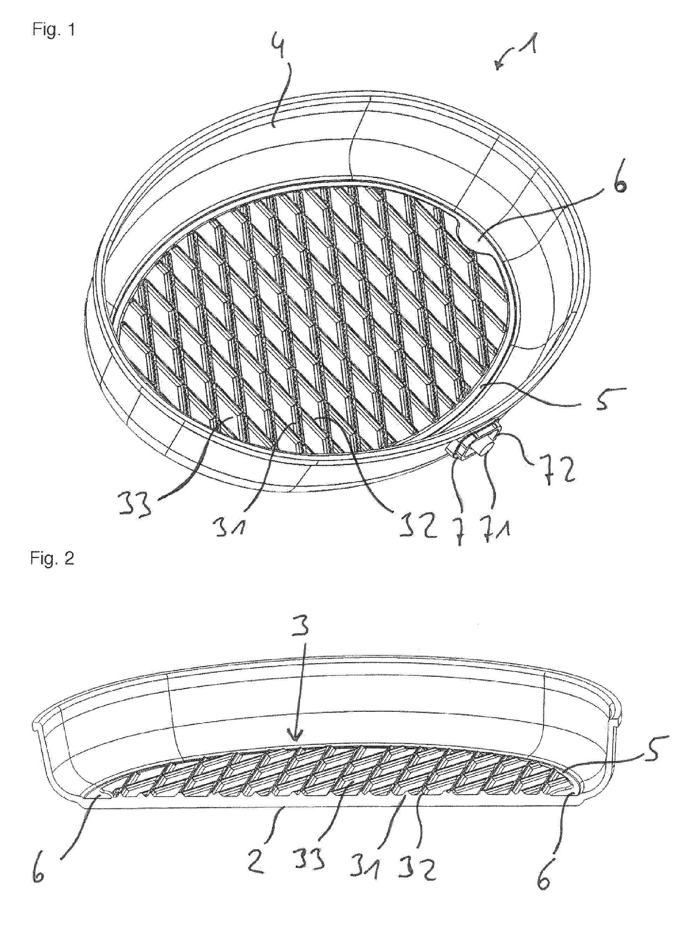

- Figur 1: die schematische Darstellung einer Bratpfanne und
- Figur 2: die Darstellung der Bratpfanne aus Figur 1 im Längsschnitt.

Die als Ausführungsbeispiel gewählte Bratpfanne 1 ist als Metallgussteil ausgebildet und besteht im Wesentlichen aus einem ovalen Boden, an dem ein umlaufender Rand 4 angeformt ist. Der Rand 4 ist mit einer Aufnahme 7 zur Befestigung eines - nicht dargestellten - Griffs versehen.

Auf seiner dem Rand 4 zugewandten Oberseite ist auf dem Boden 2 eine ein Grillmuster aufweisende Steganordnung 3 angeformt. Die Steganordnung 3 ist durch parallel regelmäßig beabstandet zueinander angeordnete erste Stege 31 gebildet, die durch winklig zu diesen ersten Stegen 31 angestellte parallel regelmäßig beabstandet zueinander angeordnete zweite Stege 32 gekreuzt sind. Durch die gekreuzten ersten Stege 31 und zweiten Stege 32 ist eine Anordnung von Rauten 33 erzielt. Dabei weisen die ersten Stege 31 sowie die zweiten Stege 32 einen im Wesentlichen dreieckförmigen Querschnitt auf.

Die Steganordnung 3 umgebend ist ein umlaufender Kanal 5 in dem Boden 2 eingebracht, der an zwei gegenüberliegend angeordneten Stellen in Richtung der Mitte des Bodens 2 bogenförmig erweitert ausgebildet ist, wodurch jeweils ein Reservoir 6 ausgebildet ist. Das Reservoir 6 dient der Aufnahme von überschüssigem Bratfett beim Bratvorgang.

Die an dem Rand 4 angeordnete Griffaufnahme 7 umfasst einen Klemmbolzen 71 zur klemmenden Fixierung eines - nicht dargestellten - Griffs. Den Klemmbolzen 71 umgebend ist ein Rahmen 72 zur Aufnahme eines - nicht dargestellten - Flammschutzblechs angeformt.

## Patentansprüche

1. Bratpfanne (1), mit einem Boden (2) und einem an diesem angeformten umlaufenden Rand (4), an dem wenigstens ein Griff angeordnet ist, **dadurch gekennzeichnet, dass** an dem Boden (2) auf seiner dem Rand (4) zugewandten Oberseite eine Steganordnung (3) zur Erzielung eines Grillmusters angeordnet ist.

2. Bratpfanne nach Anspruch 1, **dadurch gekennzeichnet, dass** die Steganordnung parallel regelmäßig beabstandet zueinander angeordnete Stege (31, 32) umfasst.

3. Bratpfanne nach Anspruch 1 oder 2, **dadurch gekennzeichnet, dass** die Steganordnung (3) derart durch sich kreuzende Stege (31, 32) gebildet ist, dass ein Parallelogramm-Grillmuster, insbesondere ein Rautenmuster erzielt ist.

4. Bratpfanne nach einem der vorgenannten Ansprüche, **dadurch gekennzeichnet, dass** die Stege (31, 32) der Steganordnung einen im Wesentlichen dreieckförmigen Querschnitt aufweisen.

5. Bratpfanne nach einem der vorgenannten Ansprüche, **dadurch gekennzeichnet, dass** die Steganordnung (3) umgebend ein umlaufender Kanal (5) angeordnet ist.

6. Bratpfanne nach Anspruch 5, **dadurch gekennzeichnet, dass** ein Reservoir (6) angeordnet ist, durch die der Kanal (5) geführt ist.

7. Bratpfanne nach einem der vorgenannten Ansprüche, **dadurch gekennzeichnet, dass** diese als Metallgussteil ausgebildet ist.
